# EUROPEAN PATENT APPLICATION

(11) **EP 1 669 585 A2**
(43) Date of publication of application: **14.06.2006**
(21) Application number: 05026967.9
(22) Date of filing: 09.12.2005
(51) Int. Cl.: F02G 5/00

(54) **Cogeneration system**

(30) Priority: 10.12.2004 KR 2004104372
(71) Applicant: LG Electronics, Inc., Seoul 150-010 (KR)
(72) Inventor: Ha, Sim Bok, Kwamgmyung-si, Kyungki-do 423-010 (KR); Chung, Baik Young , 304-1902 Doosan Apt., Kyeyang-ku, Inchum-si 407-710 (KR); Ko, Cheol Soo, Kunpo-si, Kyungki-do 435-040 (KR); Kim, Cheol Min, Manan-ku, Anyang-si Kyungki-do 430-042 (KR)
(74) Representative: Vossius & Partner

(57) **Abstract**

A cogeneration system is disclosed which includes a waste heat recovering heat exchanger (130) for recovering waste heat generated from a drive source (120) when the drive source (120) operates to drive a generator (110), heating heat exchangers (140) for heating indoor air, and a heat transfer unit (150) for transferring heat from the waste heat recovering heat exchanger (130) to the heating heat exchangers (140). The waste heat of the drive source can be used to heat indoor air present in an indoor space. Accordingly, it is possible to maximize the efficiency of the cogeneration system, and to heat indoor heat without driving a compressor (Fig. 2).

## Description

The present invention relates to a cogeneration system, and, more particularly, to a cogeneration system which can heat indoor air using waste heat of an engine.

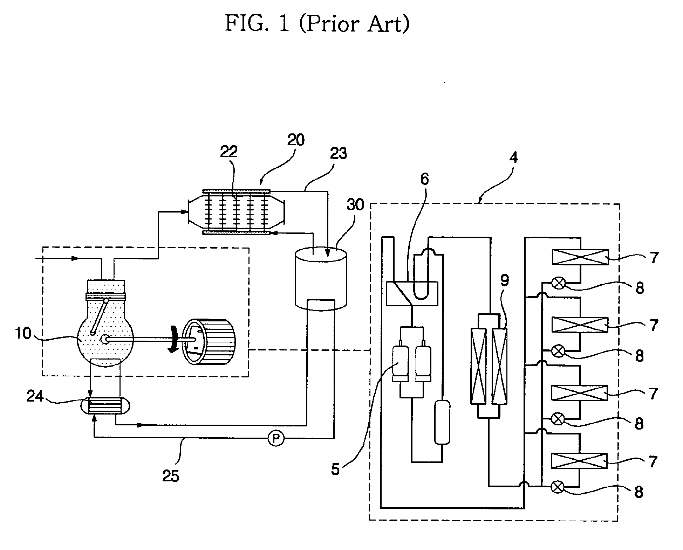

FIG. 1 is a schematic view illustrating a conventional cogeneration system.

As shown in FIG. 1, the conventional cogeneration system includes a generator 2 which generates electric power, a drive source 10 which operates to drive the generator 2, and generates waste heat during the operation thereof, such as an engine (hereinafter, the drive source 10 will be referred to as an "engine"), a waste heat recoverer 20 which recovers waste heat generated from the engine 10, and a heat consumer 30 which utilizes the waste heat recovered by the waste heat recoverer 20, such as a thermal storage tank.

The electric power generated from the generator 2 is supplied to various electric home appliances including a heat pump type air conditioner 4 and various home illumination devices.

The generator 2 and engine 10 are installed in an engine room which is defined in a chassis installed separately from the heat consumer 30.

The heat pump type air conditioner 4 includes compressors 5, a 4-way valve 6, indoor heat exchangers 7, expansion devices 8, and outdoor heat exchangers 9.

When the heat pump type air conditioner 4 operates in cooling mode, each compressor 5 compresses a refrigerant introduced thereinto. The compressed refrigerant passes through the 4-way valve 6, outdoor heat exchangers 9, expansion devices 8, and indoor heat exchangers 7, in this order, and returns to the compressors 5 through the 4-way valve 6. In this case, each outdoor heat exchanger 9 functions as a condenser, and each indoor heat exchanger 7 functions as an evaporator to absorb heat from indoor air.

On the other hand, when the heat pump type air conditioner 4 operates in heating mode, the refrigerant compressed in each compressor 5 passes through the 4-way valve 6, indoor heat exchangers 7, expansion devices 8, and outdoor heat exchangers 9, in this order, and returns to the compressors 9 through the 4-way valve 6. In this case, each outdoor heat exchanger 9 functions as an evaporator, and each indoor heat exchanger 7 functions as a condenser to heat indoor air.

The waste heat recoverer 20 includes an exhaust gas heat exchanger 22 which absorbs heat from exhaust gas discharged from the engine 10, and a cooling water heat exchanger 24 which absorbs heat from cooling water used to cool the engine 10.

The exhaust gas heat exchanger 22 is connected to the heat consumer 30 via a first heat supply line 23. Accordingly, the exhaust gas heat exchanger 22 can transfer the waste heat absorbed from the exhaust gas of the engine 10 to the heat consumer 30 via the first heat supply line 23. As mentioned above, the heat consumer 30 may be a thermal storage tank.

The cooling water heat exchanger 24 is connected to the heat consumer 30 via a second heat supply line 25. Accordingly, the cooling water heat exchanger 24 can transfer the waste heat absorbed from the cooling water of the engine 10 to the heat consumer 30 via the second heat supply line 25.

However, the conventional cogeneration system has a problem in that the waste heat of the engine 10 is only used in the heat consumer 30 such as a thermal storage tank without being used to heat indoor air, so that the efficiency of the cogeneration system cannot be maximized. Also, there is a problem in that the compressors 5 must be driven when it is desired to heat indoor air.

The present invention has been made in view of the above-mentioned problems, and it is an object of the invention to provide a cogeneration system capable of maximizing the efficiency thereof.

In accordance with the present invention, this object is accomplished by providing a cogeneration system comprising: a generator; a drive source which operates to drive the generator, and generates waste heat during the operation of the drive source; a waste heat recovering heat exchanger which recovers the waste heat of the drive source; at least one heating heat exchanger which heats indoor air; and a heat transfer unit which transfers heat from the waste heat recovering heat exchanger to the heating heat exchanger.

The cogeneration system may further comprise an indoor unit which includes an inlet, through which the indoor air is sucked into the indoor unit, and an outlet, through which the sucked indoor air is discharged out of the indoor unit, and an indoor fan which is arranged in the indoor unit. In this case, the heating heat exchanger may be arranged in the indoor unit.

The cogeneration system may further comprise an evaporator which is arranged in the indoor unit, and is adapted to evaporate a refrigerant passing through the evaporator, thereby cooling the indoor air flowing in the indoor unit, a compressor which is connected to the evaporator via a refrigerant line, a condenser which is connected to the compressor via a refrigerant line, and an expansion device which is connected to the condenser and the evaporator via refrigerant lines, respectively.

The at least one heating heat exchanger may comprise a plurality of heating heat exchangers. In this case, the heating heat exchangers may be connected in parallel to the heat transfer unit via parallel heat transfer lines, respectively.

The heat transfer unit may include a heat medium circulation line which guides a heat medium such that the heat medium is circulated through the waste heat recovering heat exchanger and the heating heat exchanger, and a heat medium circulation pump which is arranged in the heat medium circulation line, and is adapted to pump the heat medium.

The cogeneration system may further comprise a heat pump type air conditioner which includes a compressor, a 4-way valve, an outdoor heat exchanger, expansion devices, and an indoor heat exchanger, and a second heat transfer unit which transfers heat from the waste heat recovering heat exchanger to the heat pump type air conditioner.

The second heat transfer unit may include an outdoor heat exchanger connecting line which connects the outdoor heat exchanger to a heat medium circulation line connecting the waste heat recovering heat exchanger and the heating heat exchanger, and a heat medium control valve which is arranged at a junction between the heat medium circulation line and the outdoor heat exchanger connecting line, and is adapted to selectively guide the heat medium in the heat medium circulation line into the outdoor heat exchanger connecting line.

The cogeneration system may further comprise a radiator which releases heat from the waste heat recovering heat exchanger to the atmosphere.

The radiator may include a radiating heat exchanger, a radiating bypass line which connects the radiating heat exchanger to a heat medium circulation line connecting the waste heat recovering heat exchanger and the heating heat exchanger, and a heat medium control valve which is arranged at a junction of the radiating bypass line and the heat medium circulation line.

Since the cogeneration system according to the present invention includes the waste heat recovering heat exchanger for recovering heat from the drive source adapted to drive the generator, the heating heat exchanger for heating indoor air, and the heat transfer unit for transferring heat from the waste heat recovering heat exchanger, the waste heat of the drive source can be used to heat indoor air present in an indoor space. As a result, it is possible to maximize the efficiency of the cogeneration system, and to heat indoor heat without driving a compressor.

Since the cogeneration system according to the present invention also includes the indoor unit which includes the inlet, the outlet, and the indoor fan in order to guide indoor air present in an indoor space such that the indoor air is sucked into the indoor unit, and then is discharged out of the indoor unit, and which also includes the heating heat exchanger, and the evaporator arranged in the indoor unit, it is possible to not only heat the indoor space using the waste heat of the drive source, but also to cool the indoor heat using the evaporator.

Also, since the heat transfer unit of the cogeneration system according to the present invention includes the heat medium circulation line for guiding the heat medium such that the heat medium is circulated through the waste heat recovering heat exchanger and the heating heat exchanger, and the heat medium circulation pump arranged in the heat medium circulation line, to pump the heat medium, it is possible to reliably and efficiently use the waste heat of the drive source.

In addition, since the cogeneration system according to the present invention includes the heat pump type air conditioner which includes the compressor, the 4-way valve, the outdoor heat exchanger, the expansion device, and the indoor heat exchanger, and the second heat transfer unit which transfers heat from the heat medium passing through the heat medium circulation line to the outdoor heat exchanger, it is possible to heat the indoor space using the waste heat of the drive source. It is also possible to prevent the outdoor heat exchanger from being frosted, or to enhance the heating performance of the heat pump type air conditioner in low-temperature conditions, using the waste heat of the drive source.

Since the cogeneration system according to the present invention includes the radiator for releasing heat from the waste heat recovering heat exchanger to the atmosphere, the drive source can be stably driven.

The above objects, and other features and advantages of the present invention will become more apparent after reading the following detailed description when taken in conjunction with the drawings, in which:
FIG. 1 is a schematic view illustrating a conventional cogeneration system;
FIG. 2 is a schematic diagram of a cogeneration system according to a first embodiment of the present invention, illustrating a state in which an indoor space is heated is carried out using heating heat exchangers;
FIG. 3 is a schematic diagram of the cogeneration system according to the first embodiment of the present invention, illustrating a state in which waste heat is released to the atmosphere;
FIG. 4 is a schematic diagram of a cogeneration system according to a second embodiment of the present invention, illustrating a state in which an indoor space is heated using heating heat exchangers;
FIG. 5 is a schematic diagram of the cogeneration system according to the second embodiment of the present invention, illustrating a state in which waste heat is released to the atmosphere, and the indoor space is heated;
FIG. 6 is a schematic diagram of a cogeneration system according to a third embodiment of the present invention, illustrating a state in which an indoor space is heated using heating heat exchangers;
FIG. 7 is a schematic diagram of the cogeneration system according to the third embodiment of the present invention, illustrating a state in which the indoor space is heated using the heating heat exchangers and a heat pump type air conditioner; and
FIG. 8 is a schematic diagram of the cogeneration system according to the third embodiment of the present invention, illustrating a state in which waste heat is released to the atmosphere, and the indoor space is heated.

Hereinafter, exemplary embodiments of a cogeneration system according to the present invention will be described with reference to the annexed drawings.

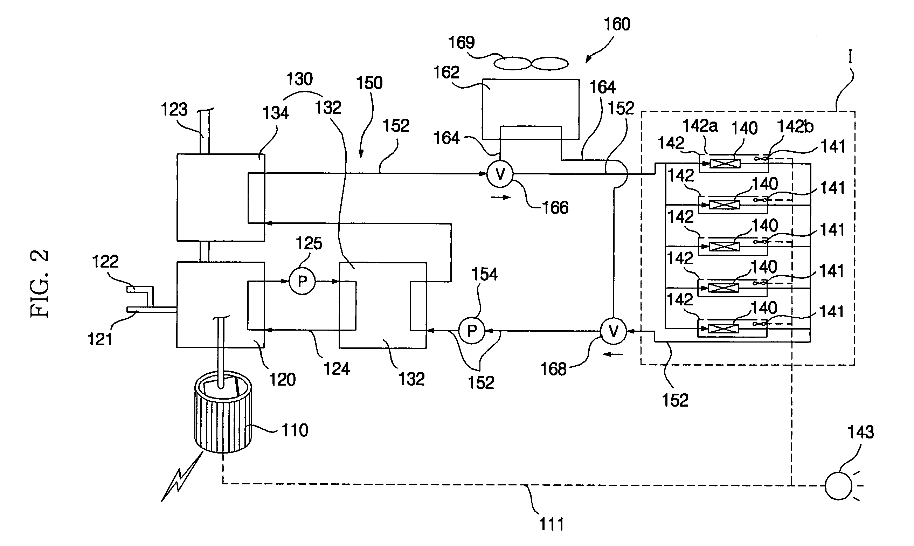

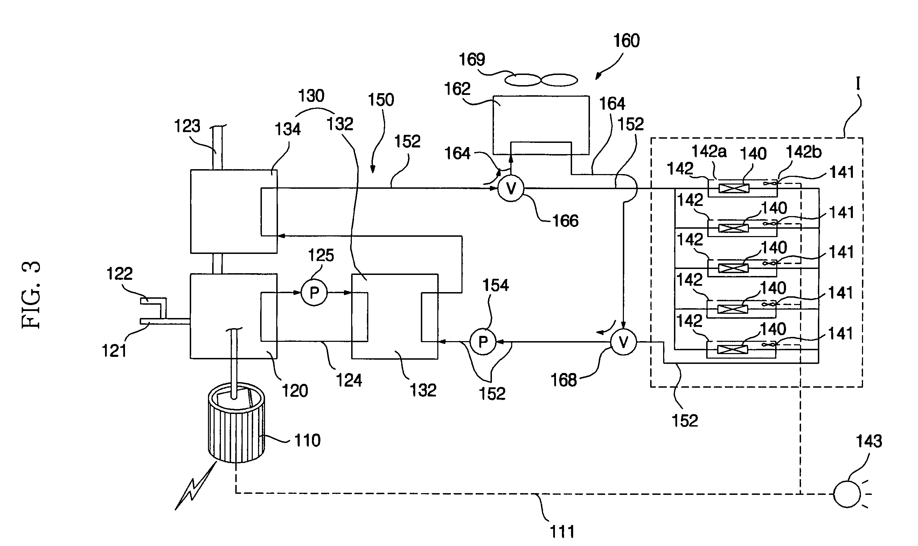

FIG. 2 is a schematic diagram of a cogeneration system according to a first embodiment of the present invention, illustrating a state in which an indoor space is heated is carried out using heating heat exchangers. FIG. 3 is a schematic diagram of the cogeneration system according to the first embodiment of the present invention, illustrating a state in which waste heat is released to the atmosphere.

As shown in FIGS. 2 and 3, the cogeneration system according to the first embodiment of the present invention includes a generator 110, a drive source 120 which operates to drive the generator 110, in order to cause the generator 110 to generate electricity, and generates waste heat during the operation thereof, a waste heat recovering heat exchanger 130 which recovers heat from the drive source 120, heating heat exchangers 140, each of which heats indoor air present in an indoor space I, and a heat transfer unit 150 which transfers heat from the waste heat recovering heat exchanger 130 to the heating heat exchangers 140.

The generator 110 may be an AC generator or a DC generator. The generator 110 includes a rotor coupled to an output shaft of the drive source so that the generator 110 generates electric power during rotation of the output shaft.

The generator 110 is electrically connected to indoor units 142, various illumination devices 143, or the like via an electric power line 111, in order to supply the generated electric power.

The drive source 120 comprises a fuel cell or an engine which operates using fuel such as liquefied gas or liquefied petroleum gas. The following description will be given only in conjunction with the case in which the drive source 120 comprises an engine.

A fuel supply tube 121, an air supply tube 122, and an exhaust conduit 123 are connected to the drive source 120. The fuel supply tube 121 is adapted to supply fuel such as liquefied gas or liquefied petroleum gas to the drive source 120. The air supply tube 122 is joined to the fuel supply tube 121 to supply air to the drive source 120. The exhaust conduit 123 is adapted to discharge exhaust gas generated from the drive source 120.

The waste heat recovering heat exchanger 130 includes a cooling water heat exchanger 132 which is connected to the engine 120 via a cooling water line 124, to recover cooling water heat from the engine 120, and an exhaust gas heat exchanger 134 which is arranged in the exhaust conduit 123, to recover heat from exhaust gas discharged from the engine 120.

A cooling water circulation pump 125 is arranged in the drive source 120 or cooling water line 124 to cause cooling water to be circulated through the drive source 120 and cooling water heat exchanger 56.

Each heating heat exchanger 140 is arranged in an associated one of the indoor units (heaters) 142 in which an indoor fan 141 is also arranged. Each indoor unit 142 includes an inlet 142a and an outlet 142b such that the indoor air in the indoor space I is sucked into the indoor unit 142, and is then discharged out of the indoor unit 142 after passing through the heating heat exchanger 140 in accordance with operation of the indoor fan 141.

An air flow path is defined in each indoor unit 142 in order to guide the indoor air of the indoor space I such that the indoor air is introduced into the indoor unit 142 through the inlet 142a, and is then discharged into the indoor space I through the outlet 142b after being heated by the heating heat exchanger 140.

In the illustrated case, the cogeneration system includes a plurality of indoor units 142 and a plurality of heating heat exchangers 140.

The heating heat exchangers 140 are connected to the heat transfer unit 150 via parallel heat medium lines such that the heating heat exchangers 140 receive heat transferred from the heat transfer unit 150, respectively,

The heat transfer unit 150 can transfer heat from one of the cooling water heat exchanger 132 and exhaust gas heat exchanger 134 to the heating heat exchangers 140, or can transfer heat from both the heat exchangers 132 and 134 to the heating heat exchangers 140. The following description will be given only in conjunction with the case in which the heat transfer unit 150 transfers heat from both the cooling water heat exchanger 132 and the exhaust gas heat exchanger 134 to the heating heat exchangers 140.

The heat transfer unit 150 includes a heat medium circulation line 152 which guides a heat medium such that the heat medium is circulated through the waste heat recovering heat exchanger 130 and heating heat exchangers 140, and a heat medium circulation pump 154 which is arranged in the heat medium circulation line 152, to pump the heat medium.

The cogeneration system further includes a radiator 160 which releases heat from the waste heat recovering heat exchanger 130 to the atmosphere.

The radiator includes a radiating heat exchanger 162, a radiating bypass line 164 which is connected to the heat medium circulation line 152, to guide the heat medium such that the heat medium is circulated through the radiating heat exchanger 162 and waste heating recovering heat exchanger 130, and heat medium control valves 166 and 168 which are arranged at junctions of the radiating bypass line 164 and heat medium circulation line 152, respectively.

The radiator 160 further includes a radiating fan 169 which blows outdoor air to the radiating heat exchanger 162, in order to release heat from the radiating heat exchanger 162 to the atmosphere.

Hereinafter, operation of the cogeneration system having the above-described configuration will be described.

When the engine 120 is driven, the generator 110 generates electricity in accordance with rotation of its rotor. The generated electricity is supplied to the indoor units 142 or illumination device 143 via the electric power line 111.

During the operation of the engine 120, exhaust gas waste heat and cooling water waste heat from the engine 120 are recovered by the cooling water heat exchanger 132 and exhaust gas heat exchanger 134, respectively.

When the indoor units 142 operate, the indoor fans 141 rotate, and the heat medium circulation pump 154 is driven. Also, the heat medium control valves 166 and 168 are switched to a heating mode, so as to guide the heat medium into the heating heat exchangers 140.

The heat medium in the heat medium circulation line 152 is pumped by the heat medium circulation pump 154, so that the heat medium passes through the cooling water heat exchanger 132 and exhaust gas heat exchanger 134. The heat medium is heated while passing through the cooling water heat exchanger 132 and exhaust gas heat exchanger 134, and is then introduced into the heating heat exchangers 140 which, in turn, absorbs heat from the heat medium. Thus, the heat medium transfers waste heat to the heating heat exchangers 140 while being circulated through the cooling water heat exchanger 132, exhaust gas heat exchanger 134, and heating heat exchangers 140.

Meanwhile, during the above-described flow of the waste heat recovered from the engine 120, indoor air present in the indoor space I is sucked into the indoor units 142 through the inlets 142a in accordance with operation of the indoor fans 141, is heated by the heating heat exchangers 140, and is then discharged into the indoor space I through the outlets 142b. Thus, the indoor space I is heated.

On the other hand, when the operation of the indoor units 142 is stopped, the rotation of the indoor fans 141 is stopped. In this case, the heat medium circulation pump 154 is driven. Also, the heat medium control valves 166 and 168 are switched to a radiating mode, so as to guide the heat medium to the radiating heat exchanger 162. The radiating fan 169 also rotates.

The heat medium in the heat medium circulation line 152 is pumped by the heat medium circulation pump 154, so that the heat medium passes through the cooling water heat exchanger 132 and exhaust gas heat exchanger 134. The heat medium is heated while passing through the cooling water heat exchanger 132 and exhaust gas heat exchanger 134, and is then introduced into the radiating heat exchanger 162 which, in turn, absorbs heat from the heat medium. Thus, the heat medium transfers waste heat to the radiating heat exchangers 162 while being circulated through the cooling water heat exchanger 132, exhaust gas heat exchanger 134, and radiating heat exchangers 162.

Meanwhile, during the above-described flow of the waste heat recovered from the engine 120, outdoor air is guided to the radiating heat exchanger 162 by the radiating fan 169. The waste heat transferred to the radiating heat exchanger 162 is released to the atmosphere.

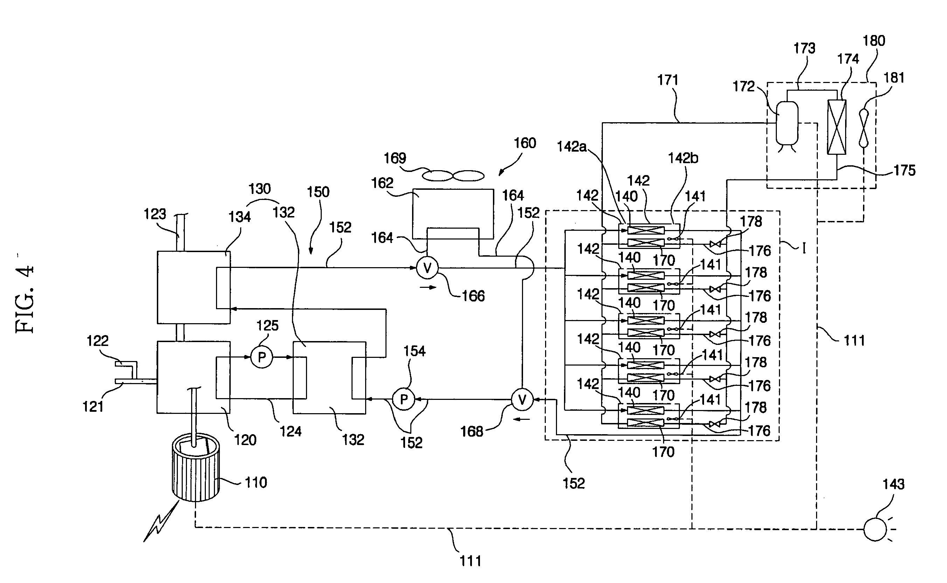

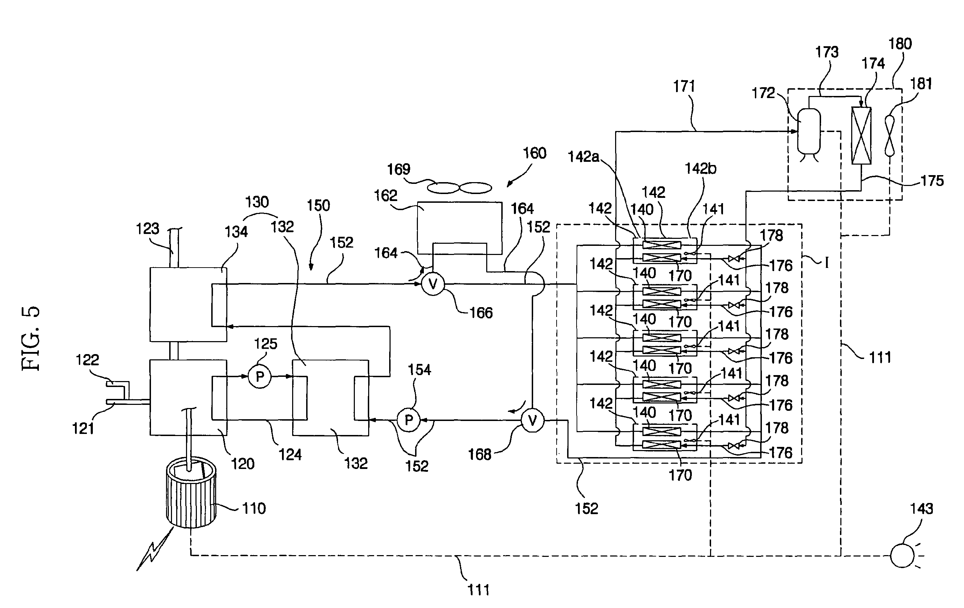

FIG. 4 is a schematic diagram of a cogeneration system according to a second embodiment of the present invention, illustrating a state in which an indoor space is heated using heating heat exchangers. FIG. 5 is a schematic diagram of the cogeneration system according to the second embodiment of the present invention, illustrating a state in which waste heat is released to the atmosphere, and the indoor space is heated.

As shown in FIGS. 4 and 5, the cogeneration system according to the second embodiment of the present invention further includes, in addition to the configuration according to the first embodiment, evaporators 170 which are arranged in respective indoor units (coolers/heaters)142, together with the heating heat exchangers 140, a compressor 172 which is connected to the evaporators 170 via refrigerant lines 171, respectively, a condenser 174 which is connected to the compressor 172 via a refrigerant line 173, and expansion devices 178 which are connected to the condenser 174 via a refrigerant line 175, and are connected to the evaporators 170 via refrigerant lines 176, respectively.

The compressor 172 and condenser 174 are arranged in an outdoor unit 180 installed in the outdoors.

An outdoor fan 181 is also arranged in the outdoor unit 180, to blow outdoor air to the condenser 174.

The outdoor unit 180 is electrically connected to the generator 110 via the electric power line 111.

The expansion devices 178 may be arranged in the associated indoor units 142, respectively, or may be arranged in the outdoor unit 180.

In the cogeneration system according to this embodiment, when the indoor units 142 operate in heating mode, the indoor fans 141 thereof rotate, and the heat medium circulation pump 154 is driven, as in the first embodiment. Also, the heat medium control valves 166 and 168 are switched to a heating mode, so as to guide the heat medium into the heating heat exchangers 140. Accordingly, indoor air present in the indoor space I is heated by the heating heat exchangers 140 to which waste heat from the engine 120 is transferred. Thus, the indoor space I is heated by the heated indoor air.

On the other hand, when the indoor units 142 operate in cooling mode, the indoor fans 141 thereof rotate, and the heat medium circulation pump 154 is driven. In this case, the heat medium control valves 166 and 168 are switched to a radiating mode, so as to guide the heat medium into the radiating heat exchanger 162. In the radiating mode, the radiating fan 169 also rotates, and the compressor 172 is driven.

The heat medium in the heat medium circulation line 152 transfers waste heat to the radiating heat exchanger 162 while being circulated through the cooling water heat exchanger 132, exhaust gas heat exchanger 134, and radiating heat exchanger 162, as in the first embodiment of the present invention. The waste heat transferred to the radiating heat exchanger 162 is released to the atmosphere in accordance with the rotation of the radiating fan 169.

Meanwhile, during the release of the waste heat of the engine 120 to the atmosphere, the indoor air in the indoor space I is sucked into the indoor units 142 through the inlets 142a in accordance with operation of the indoor fans 141. Thereafter, the indoor air passes around the heating heat exchangers 140 without heat-exchanging with the heating heat exchangers 140, and is then discharged into the indoor space I through the outlets 142b after being cooled by the evaporators 170. Thus, the indoor space I is cooled.

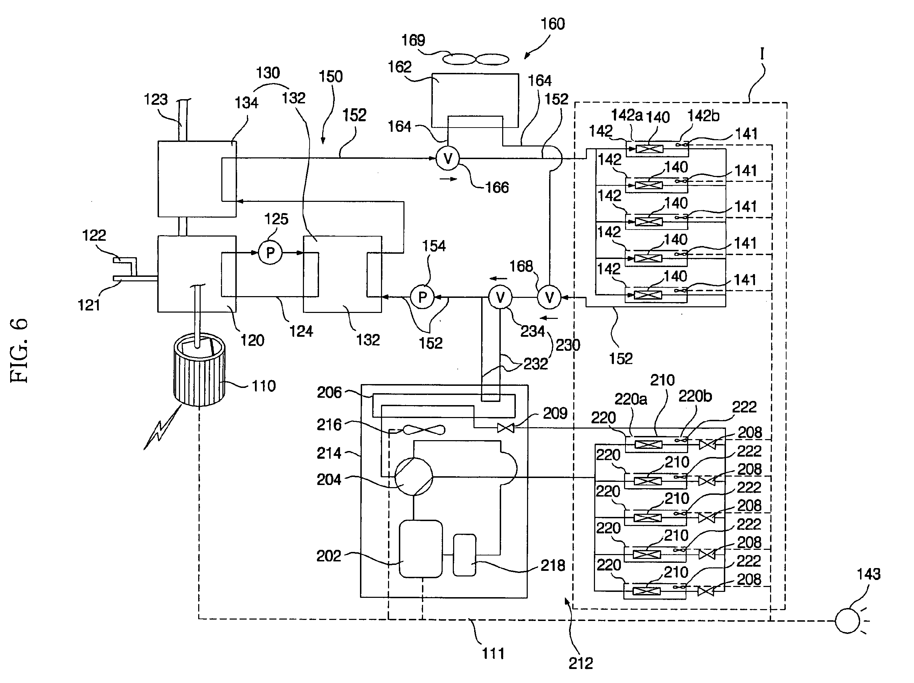

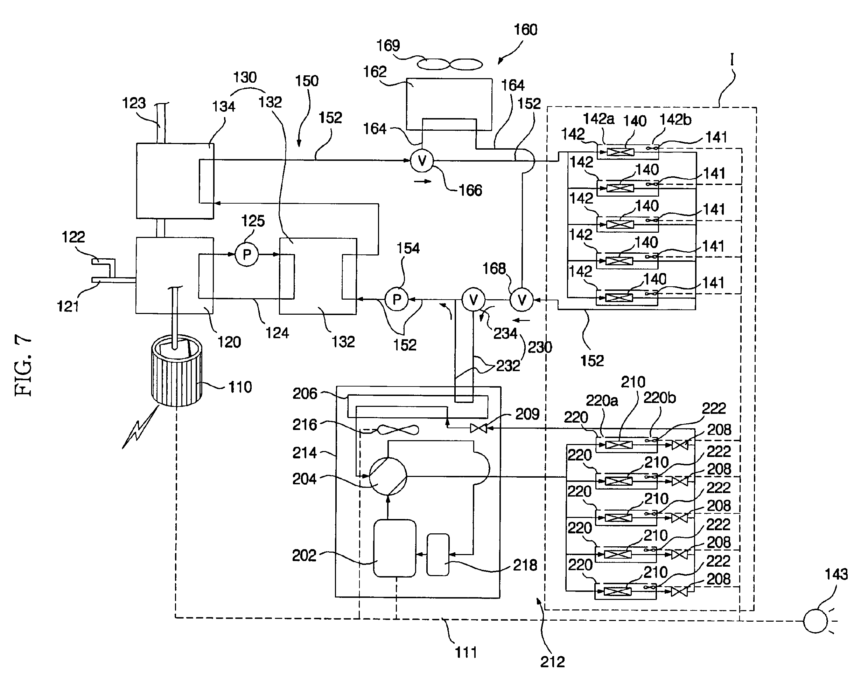

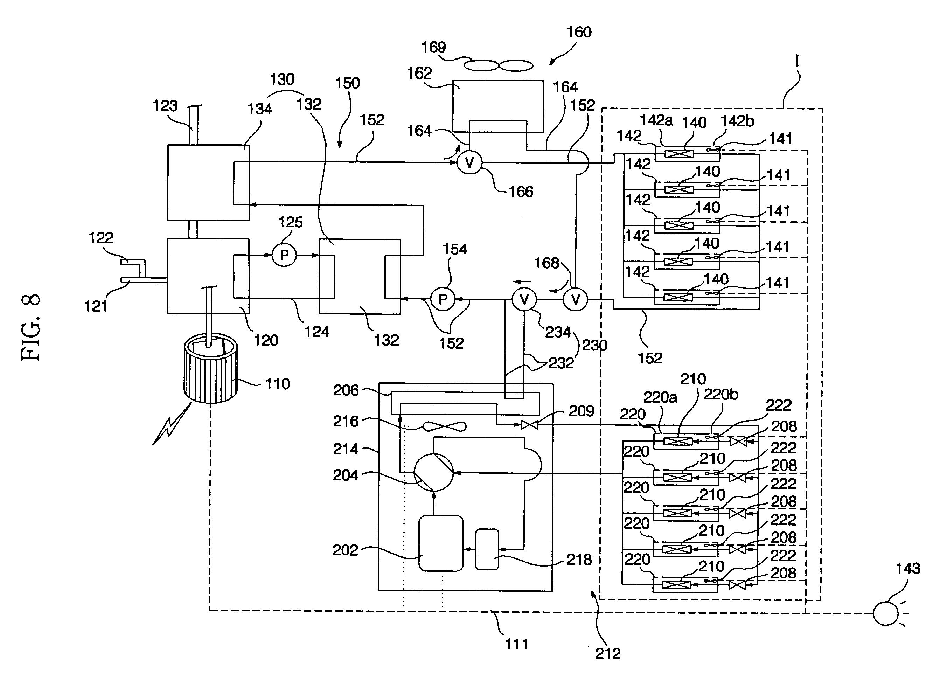

FIG. 6 is a schematic diagram of a cogeneration system according to a third embodiment of the present invention, illustrating a state in which an indoor space is heated using heating heat exchangers. FIG. 7 is a schematic diagram of the cogeneration system according to the third embodiment of the present invention, illustrating a state in which the indoor space is heated using the heating heat exchangers and a heat pump type air conditioner. FIG. 8 is a schematic diagram of the cogeneration system according to the third embodiment of the present invention, illustrating a state in which waste heat is released to the atmosphere, and the indoor space is heated.

As shown in FIGS. 6 to 8, the cogeneration system according to the third embodiment of the present invention further includes, in addition to the configuration of the first embodiment of the present invention, a heat pump type air conditioner 212 which includes compressors 202, a 4-way valve 204, an outdoor heat exchanger 206, expansion devices 208 and 209, and indoor heat exchangers 210, and a second heat transfer unit 230 which transfers heat from the waste heat recovering heat exchanger 130 to the heat pump type air conditioner 212, in particular, the outdoor heat exchanger 206. The cogeneration system of this embodiment has the same configuration and functions as those of the first or second embodiment of the present invention, except for the heat pump type air conditioner 212 and second heat transfer unit 230. Accordingly, the constituent elements of the third embodiment respectively corresponding to those of the first or second embodiment are designated by the same reference numerals, and no detailed description thereof will be given.

The compressor 202, 4-way valve 204, and outdoor heat exchanger 206 are arranged in a heat pump outdoor unit 214.

When the heat pump type air conditioner 212 operates in heating mode, the 4-way valve 204 changes a flow path defined therein, in order to guide a refrigerant compressed in the compressor 202 into the indoor heat exchangers 210, as shown in FIG. 7. When the heat pump type air conditioner 212 operates in cooling mode, the 4-way valve 204 changes its flow path, in order to guide the refrigerant compressed in the compressor 202 into the outdoor heat exchanger 206, as shown in FIG. 8.

The expansion devices 208 may be arranged in heat pump indoor units 220 which will be described hereinafter, respectively, or may be arranged in the heat pump outdoor unit 214, together with the expansion device 209.

An outdoor fan 216 is arranged in the heat pump outdoor unit 214, to blow outdoor air to the outdoor heat exchanger 206 during the heating and cooling operations of the heat pump type air conditioner 212.

In the heat pump outdoor unit 214, an accumulator 218 is arranged in a suction line connected to the suction side of the compressor 202, in order to accumulate a liquid portion of the refrigerant emerging from the 4-way valve 204.

Meanwhile, each indoor heat exchanger 210 is arranged in an associated one of the heat pump indoor unit 220 in which an indoor fan 222 is also arranged. Each heat pump indoor unit 220 includes an inlet 220a and an outlet 220b such that the indoor air in the indoor space I is sucked into the heat pump indoor unit 220, and is then discharged out of the heat pump indoor unit 220 after passing through the indoor heat exchanger 210 in accordance with operation of the indoor fan 222.

An air flow path is defined in each heat pump indoor unit 220 in order to guide the indoor air of the indoor space I such that the indoor air is introduced into the heat pump indoor unit 220 through the inlet 220a, and is then discharged into the indoor space I through the outlet 220b after being heated by the indoor heat exchanger 210.

In the illustrated case, the cogeneration system includes a plurality of heat pump indoor units 220 and a plurality of indoor heat exchangers 210.

The second heat transfer unit 230 transfers heat from the heat medium passing through the heat medium circulation line 152 to the outdoor heat exchanger 206. The second heat transfer unit 230 includes an outdoor heat exchanger connecting line 232 which guides the heat medium in heat medium circulation line 152 into the outdoor heat exchanger 206, in order to cause the outdoor heat exchanger 206 to be heated by the heat medium, and a second heat medium control valve 234 which is arranged at a junction between the heat medium circulation line 152 and the outdoor heat exchanger connecting line 232, in order to selectively guide the heat medium in the heat medium circulation line 152 into the outdoor heat exchanger connecting line 232.

Although not clearly shown, the outdoor heat exchanger connecting line 232 extends into the interior of the outdoor heat exchanger 260 through the bottom of the outdoor heat exchanger 206, in order to defrost the outdoor heat exchanger 206 during the heating operation of the heat pump type air conditioner 212, and to enhance the heating performance of the heat pump type air conditioner 212 in low-temperature conditions (when the temperature of outdoor air is -5°C or below).

In the cogeneration system according to this embodiment, when the indoor units 142 operate in heating mode under the condition in which the heat pump type air conditioner 212 does not operate, the indoor fans 141 rotate, and the heat medium circulation pump 154 is driven. Also, the heat medium control valves 166 and 168 are switched to a heating mode, so as to guide the heat medium into the heating heat exchangers 140. On the other hand, the second heat medium control valve 234 is switched to a valve position to prevent the heat medium from passing through the outdoor heat exchanger 206.

The heat medium in the heat medium circulation line 152 is pumped by the heat medium circulation pump 154, so that the heat medium passes through the cooling water heat exchanger 132 and exhaust gas heat exchanger 134, as shown in FIG. 6. The heat medium is heated while passing through the cooling water heat exchanger 132 and exhaust gas heat exchanger 134, and is then introduced into the heating heat exchangers 140 which, in turn, absorbs heat from the heat medium. Thus, the heat medium transfers waste heat to the heating heat exchangers 140 while being circulated through the cooling water heat exchanger 132, exhaust gas heat exchanger 134, and heating heat exchangers 140.

Meanwhile, while the waste heat recovered from the engine 120 is only transferred to the heating heat exchangers 140 of the indoor units 142, indoor air present in the indoor space I is sucked into the indoor units 142 through the inlets 142a in accordance with operation of the indoor fans 141, is heated by the heating heat exchangers 140 heated by the waste heat, and is then discharged into the indoor space I through the outlets 142b. Thus, the indoor space I is heated.

On the other hand, when the indoor units 142 operate in heating mode, and the heat pump type air conditioner 212 operates in heating mode, the indoor fans 141 rotate, and the heat medium circulation pump 154 is driven. In this case, the heat medium control valves 166 and 168 are switched to a heating mode, so as to guide the heat medium into the heating heat exchangers 140. The second heat medium control valve 234 is also switched to a valve position to allow the heat medium to pass through the outdoor heat exchanger 206. The compressor 202 is driven, and the 4-way valve 204 is switched to a heating mode. Also, the indoor fans 222 of the heat pump indoor units 220 and the outdoor fan 216 of the heat pump outdoor unit 214 rotate.

The heat medium in the heat medium circulation line 152 is pumped by the heat medium circulation pump 154, so that the heat medium passes through the cooling water heat exchanger 132 and exhaust gas heat exchanger 134, as shown in FIG. 7. The heat medium is heated while passing through the cooling water heat exchanger 132 and exhaust gas heat exchanger 134, and is then introduced into the heating heat exchangers 140 which, in turn, absorbs heat from the heat medium. That is, the heat medium heats the heating heat exchangers 140. The heat medium subsequently heats the outdoor heat exchanger 206 while passing through the outdoor heat exchanger 206.

Thus, the heat medium transfers waste heat to the heating heat exchangers 140 and outdoor heat exchanger 206 while being circulated through the cooling water heat exchanger 132, exhaust gas heat exchanger 134, heating heat exchangers 140, and outdoor heat exchanger 206.

Meanwhile, while the waste heat recovered from the engine 120 is transferred to both the heating heat exchangers 140 of the indoor units 142 and the outdoor heat exchanger 206 of the heat pump type air conditioner 212, indoor air present in the indoor space I is sucked into the indoor units 142 through the inlets 142a in accordance with the indoor fans 141, is heated by the heating heat exchangers 140 heated by the waste heat, and is then discharged into the indoor space I through the outlets 142b. Thus, the indoor space I is heated.

Also, the indoor air of the indoor space I is sucked into the heat pump indoor units 220 through the inlets 220a in accordance with operation of the indoor fans 222, is heated by the indoor heat exchangers 210 of the heat pump type air conditioner 212, and is then discharged into the indoor space I through the outlets 220b. Thus, the indoor space I is heated.

On the other hand, when the operation of the indoor units 142 is stopped, and the heat pump type air conditioner 212 operates in cooling mode, the rotation of the indoor fans 141 of the indoor units 142 is stopped. In this case, the heat medium circulation pump 154 is driven. Also, the heat medium control valves 166 and 168 are switched to a radiating mode, so as to guide the heat medium to the radiating heat exchanger 162. The radiating fan 169 rotates. The second heat medium control valve 234 is switched to the valve position to prevent the heat medium from passing through the outdoor heat exchanger 206. Also, the compressor 202 is driven, and the 4-way valve 204 is switched to a cooling mode. The indoor fans 222 of the heat pump indoor units 220 and the outdoor fan 216 of the heat pump outdoor unit 214 rotate.

The heat medium in the heat medium circulation line 152 is pumped by the heat medium circulation pump 154, so that the heat medium passes through the cooling water heat exchanger 132 and exhaust gas heat exchanger 134, as shown in FIG. 8. The heat medium is heated while passing through the cooling water heat exchanger 132 and exhaust gas heat exchanger 134, and is then introduced into the radiating heat exchanger 162 which, in turn, absorbs heat from the heat medium. Thus, the heat medium transfers waste heat to the radiating heat exchangers 162 while being circulated through the cooling water heat exchanger 132, exhaust gas heat exchanger 134, and radiating heat exchangers 162.

During the above-described flow of the waste heat recovered from the engine 120, outdoor air is guided to the radiating heat exchanger 162 by the radiating fan 169. The waste heat transferred to the radiating heat exchanger 162 is released to the atmosphere.

Meanwhile, during the release of the waste heat recovered from the engine 120 to the atmosphere by the radiating heat exchanger 162, as described above, indoor air present in the indoor space I is sucked into the heat pump indoor units 220 through the inlets 220a in accordance with operation of the indoor fans 222, is cooled by the indoor heat exchangers 210 of the heat pump type air conditioner 212, and is then discharged into the indoor space I through the outlets 220b. Thus, the indoor space I is cooled.

The cogeneration system according to any one of the above-described embodiments of the present invention has various effects.

That is, the cogeneration system according to the present invention includes a waste heat recovering heat exchanger for recovering heat from a drive source adapted to drive a generator, a heating heat exchanger for heating indoor air, and a heat transfer unit for transferring heat from the waste heat recovering heat exchanger. Accordingly, the waste heat of the drive source can be used to heat indoor air present in an indoor space. As a result, it is possible to maximize the efficiency of the cogeneration system, and to heat indoor heat without driving a compressor.

The cogeneration system according to the present invention also includes an indoor unit which includes an inlet, an outlet, and an indoor fan in order to guide indoor air present in an indoor space such that the indoor air is sucked into the indoor unit, and then is discharged out of the indoor unit, and which also includes a heating heat exchanger, and an evaporator arranged in the indoor unit. Accordingly, it is possible to not only heat the indoor space using the waste heat of the drive source, but also to cool the indoor heat using the evaporator.

Also, the heat transfer unit of the cogeneration system according to the present invention includes a heat medium circulation line for guiding the heat medium such that the heat medium is circulated through the waste heat recovering heat exchanger and the heating heat exchanger, and a heat medium circulation pump arranged in the heat medium circulation line, to pump the heat medium. Accordingly, it is possible to reliably and efficiently use the waste heat of the drive source.

In addition, the cogeneration system according to the present invention includes a heat pump type air conditioner which includes a compressor, a 4-way valve, an outdoor heat exchanger, an expansion device, and an indoor heat exchanger, and a second heat transfer unit which transfers heat from the heat medium passing through the heat medium circulation line to the outdoor heat exchanger. Accordingly, it is possible to heat the indoor space using the waste heat of the drive source. It is also possible to prevent the outdoor heat exchanger from being frosted, or to enhance the heating performance of the heat pump type air conditioner in low-temperature conditions, using the waste heat of the drive source.

The cogeneration system according to the present invention includes a radiator for releasing heat from the waste heat recovering heat exchanger to the atmosphere. Accordingly, the drive source can be stably driven.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A cogeneration system comprising:
a generator (110);
a drive source (120) which operates to drive the generator (110), and generates waste heat during the operation of the drive source (120);
a waste heat recovering heat exchanger (130) which recovers the waste heat of the drive source (120);
at least one heating heat exchanger (140) which heats indoor air; and
a heat transfer unit (150) which transfers heat from the waste heat recovering heat exchanger (130) to the heating heat exchanger (140).

2. The cogeneration system according to claim 1, further comprising:
an indoor unit (142) which includes an inlet (142a), through which the indoor air is sucked into the indoor unit (142), and an outlet, through which the sucked indoor air is discharged out of the indoor unit (142); and
an indoor fan (141) which is arranged in the indoor unit (142),
wherein the heating heat exchanger (140) is arranged in the indoor unit (142).

3. The cogeneration system according to claim 2, further comprising:
an evaporator (170) which is arranged in the indoor unit (142), and is adapted to evaporate a refrigerant passing through the evaporator (170), thereby cooling the indoor air flowing in the indoor unit (142);
a compressor (172) which is connected to the evaporator (170) via a refrigerant line (171);
a condenser (174) which is connected to the compressor (172) via a refrigerant line (173); and
an expansion device (178) which is connected to the condenser (174) and the evaporator (170) via refrigerant lines (175), (176), respectively.

4. The cogeneration system according to any of claims 1 to 3, wherein:
the at least one heating heat exchanger (140) comprises a plurality of heating heat exchangers (140); and
the heating heat exchangers (140) are connected in parallel to the heat transfer unit (150) via parallel heat transfer lines, respectively.

5. The cogeneration system according to any of claims 1 to 4, wherein the heat transfer unit (150) includes:
a heat medium circulation line (152) which guides a heat medium such that the heat medium is circulated through the waste heat recovering heat exchanger (130) and the heating heat exchanger (140); and
a heat medium circulation pump (154) which is arranged in the heat medium circulation line (152), and is adapted to pump the heat medium.

6. The cogeneration system according to any of claims 1 to 5, further comprising:
a heat pump type air conditioner (212) which includes a compressor (202), a 4-way valve (204), an outdoor heat exchanger (206), expansion devices (208), (209), and an indoor heat exchanger (210); and
a second heat transfer unit (230) which transfers heat from the waste heat recovering heat exchanger (130) to the heat pump type air conditioner (212).

7. The cogeneration system according to claim 6, wherein the second heat transfer unit (230) includes:
an outdoor heat exchanger connecting line (232) which connects the outdoor heat exchanger (206) to a heat medium circulation line (152) connecting the waste heat recovering heat exchanger (130) and the heating heat exchanger (140); and
a heat medium control valve (234) which is arranged at a junction between the heat medium circulation line (152) and the outdoor heat exchanger connecting line (232), and is adapted to selectively guide the heat medium in the heat medium circulation line (152) into the outdoor heat exchanger connecting line (232).

8. The cogeneration system according to any one of claims 1 to 7, further comprising:
a radiator (160) which releases heat from the waste heat recovering heat exchanger (130) to the atmosphere.

9. The cogeneration system according to claim 8, wherein the radiator (160) includes:
a radiating heat exchanger (162);
a radiating bypass line (164) which connects the radiating heat exchanger (162) to a heat medium circulation line (152) connecting the waste heat recovering heat exchanger (130) and the heating heat exchanger (140); and
a heat medium control valve (166 or 168) which is arranged at a junction of the radiating bypass line (164) and the heat medium circulation line (152).

10. A method of operating a cogeneration system comprising method steps corresponding to the features of any of claims 1 to 9.
